# EUROPÄISCHE PATENTANMELDUNG

(11) **EP 3 147 269 A1**
(43) Veröffentlichungstag der Anmeldung: **29.03.2017**
(21) Anmeldenummer: 15002730.8
(22) Anmeldetag: 22.09.2015
(51) Int. Cl.: C04B 28/06, C04B 7/32, C04B 7/34, C04B 111/00

(54) **3D-DRUCK VON BAUTEILEN UND GEBÄUDEN MIT BCT-ZEMENT**

(71) Anmelder: HeidelbergCement AG, 69120 Heidelberg (DE)
(72) Erfinder: Dienemann, Wolfgang, 69256 Mauer (DE); Wortmann, Kai, 37603 Holzminden (DE)
(74) Vertreter: Zellentin & Partner mbB Patentanwälte

(57) **Zusammenfassung**

Die vorliegende Erfindung betrifft die Verwendung von Belit-Calciumsulfoaluminat-Ternesit-Zement zur Herstellung von Bauteilen und Gebäuden mittels 3D-Druck und ein Verfahren zur Herstellung von Bauteilen und Gebäuden durch 3D-Drucken von Belit-Calciumsulfoaluminat-Ternesit-Zement.

## Beschreibung

Die vorliegende Erfindung betrifft die Verwendung von Belit-Calciumsulfoaluminat-Ternesit-(BCT)-Zement zur Herstellung von Bauteilen und Gebäuden mittels 3D-Druck und ein Verfahren zur Herstellung von Bauteilen und Gebäuden durch 3D-Drucken von BCT-Zement.

3D-Druck ist im Rahmen der Rapid-Prototyping-Verfahren entwickelt worden, d.h. für Fertigungsverfahren, welche das Ziel haben, vorhandene CAD-Daten möglichst ohne manuelle Umwege oder Formen direkt und schnell in Prototypen oder Werkstücke umzusetzen. Beim Rapid Prototyping wird in der Regel das Werkstück schichtweise aus formlosem oder formneutralem Material unter Nutzung physikalischer und/oder chemischer Effekte aufgebaut.

Neben der Herstellung von Prototypen gewinnt die Fertigung von Endprodukten an Bedeutung. Unter der Bezeichnung Contour Crafting wurde von Prof. Behrokh Khoshnevis in den USA die Anwendung von 3D-Druck zur Herstellung von Gebäuden vorgeschlagen. Dabei werden die Außenkonturen der Wände mit Schnellzement lagenweise gedruckt und der Zwischenraum, ggfs. nach dem Einsetzen einer Bewehrung, mit normalem Beton aufgefüllt. Diese Herangehensweise ist aufwändig.

In China wurde von Ma Yihe ein System entwickelt, bei dem Bauteile wie Wände und Decken gedruckt und anschließend analog zum Fertighausbau zum Gebäude montiert werden, siehe u.a. CN 104372884 A, CN 204081129 U und CN 203654462 U. Über den Bau einer Villa aus solchen Teilen wurde z.B. von W. Kempkens auf www.ingenieur.de am 31.1.2015 unter dem Titel "Chinesische Ingenieure bauen Villa mit 3D-Drucker" berichtet.

Ein Vorschlag für eine als Baustoff zum 3D-Drucken geeignete Zementmischung findet sich in CN 104310918 A. Demgemäß soll der Baustoff 33 - 44 % Zement, 0 - 8 % anorganisches Pulver, 32 - 38 % speziellen Sand, 2,5 - 3 % Polymer und ein Gemisch aus Zusatzmitteln umfassen. Als Zement wird ein Gemisch aus Calciumsulfoaluminatzement und Portlandzement verwendet. Nachteilig daran ist, dass das komplexe Zusatzmittelgemisch und auch die Zusatzstoffe Polymer und anorganisches Pulver kontinuierlich an die aktuelle Zementqualität angepasst werden müssen und die benötigten Mengen Zusatzmittel und Polymer außerdem den Baustoff relativ teuer machen.

Es besteht daher das Problem, dass mit den derzeit verwendeten Techniken/Baustoffen die Kosten bzw. der Aufwand für eine breite Anwendung noch zu hoch sind. Demgemäß war es Aufgabe der Erfindung, einen günstigeren und/oder einfacheren Baustoff bereitzustellen.

Überraschend wurde nun gefunden, dass ein BCT-Zement, sofern man keinen oder wenig Verzögerer zusetzt, sowohl eine ausreichende Frühfestigkeit als auch eine brauchbare Endfestigkeit entwickelt und ohne komplexe Zusatzmittelgemische als Baustoff zum 3D-Drucken von Bauteilen und Gebäuden geeignet ist.

Die obige Aufgabe wird daher durch die Verwendung von BCT-Zement zum 3D-Drucken von Bauteilen und Gebäuden gelöst, sowie durch ein Verfahren zum Herstellen von Bauteilen und Gebäuden, umfassend die Schritte Bereitstellen von BCT-Zement und 3D-Drucken des Bauteils oder Gebäudes.

Um die weitere Beschreibung zu vereinfachen, werden folgende in der Zementindustrie üblichen Abkürzungen verwendet: H - H₂O, C - CaO, A - Al₂O₃, F - Fe₂O₃, M - MgO, S - SiO₂ und $ - SO₃. Außerdem werden Verbindungen meist in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Verbindungen, wie z.B. Klinkerphasen, in Abhängigkeit vom Chemismus des Rohmehls und der Art der Herstellung, durch die Substitution mit diversen Fremdionen variieren. Solche Verbindungen sind im Rahmen der Erfindung bei Angabe der reinen Form mit umfasst, außer es ist anders angegeben.

Soweit nichts anderes angegeben ist, ist mit "reaktiv" eine hydraulische Reaktivität gemeint.

Im Rahmen der vorliegenden Erfindung meint Klinker ein Sinterprodukt, welches durch Brennen eines Ausgangsmaterials bei erhöhter Temperatur erhalten wird und zumindest eine hydraulisch reaktive Phase enthält. Brennen meint die Aktivierung durch Veränderungen einer oder mehrerer der Eigenschaften Chemismus, Kristallinität, Phasenzusammensetzung, dreidimensionale Anordnung und Bindungsverhalten der Gerüstatome durch die Zufuhr von thermischer Energie. Das Ausgangsmaterial kann im Einzelfall auch ein einzelner Rohstoff sein, wenn dieser alle gewünschten Substanzen in der richtigen Relation enthält, das ist aber die Ausnahme. Das Ausgangsmaterial kann auch Mineralisatoren enthalten. Als Mineralisatoren werden Stoffe bezeichnet, welche als Flussmittel wirken und/oder die Temperatur senken, die zur Bildung einer Schmelze notwendig ist, und/oder solche, die die Bildung der Klinkerverbindung fördern, wie zum Beispiel durch Mischkristallbildung und/oder Phasenstabilisierung. Mineralisatoren können im Ausgangsmaterial als Bestandteil enthalten sein oder gezielt zugefügt werden.

Mit Zement wird ein mit oder ohne Zusatz weiterer Komponenten gemahlener Klinker bezeichnet, aber auch andere hydraulisch erhärtende Materialien und Mischungen, beispielsweise aber nicht ausschließlich Sulfathüttenzement, Geopolymerzement und durch hydrothermale Umsetzung erhaltener Belitzement. Bindemittel oder Bindemittelmischung bezeichnet ein in Kontakt mit Wasser hydraulisch erhärtendes Material, welches Zement enthält und typischerweise aber nicht zwingend weitere, fein gemahlene Komponenten. Das Bindemittel gelangt nach Zusatz von Wasser, meist auch Gesteinskörnung und ggfs. Zusatzmitteln, als Baustoff zur Anwendung.

Klinkerersatzmaterial oder SCM bezeichnet ein puzzolanisches und/oder latent-hydraulisches Material, das in einem Zement bzw. einem Bindemittel einen Teil des Klinkers ersetzt. Latent-hydraulisches Materialien weisen eine Zusammensetzung auf, die in Kontakt mit Wasser eine hydraulische Erhärtung ermöglicht, wobei typischerweise für eine Erhärtung in technisch nutzbaren Zeiträumen ein Anreger nötig ist. Mit Anreger oder Aktivator ist ein Material gemeint, welches die Erhärtung von latent-hydraulischen Materialien beschleunigt. Es kann sich um einen Zusatz handeln, etwa Sulfat oder Calcium(hydr)oxid und/oder um Produkte der hydraulischen Reaktion des Klinkers, z.B. setzen Calciumsilikate bei der Erhärtung Calciumhydroxid frei, welches als Anreger wirkt. Puzzolanische Materialien sind durch einen Gehalt an reaktionsfähigem Siliziumdioxid gekennzeichnet, welches bei der Hydratation eines Bindemittels mit in der wässrigen Phase vorhandenem Calciumhydroxid zu Festigkeits-bildenden Calciumsilikathydratphasen umgesetzt wird. In der Praxis ist die Grenze zwischen latent-hydraulischen und puzzolanischen Materialien fließend, z.B. können Flugaschen je nach Gehalt an Calciumoxid puzzolanisch oder latent-hydraulische Materialien sein. Mit SCM sind sowohl latent-hydraulische als auch puzzolanische Materialien gemeint. Von den SCM zu unterschieden sind jedoch unreaktive, mineralische Zusätze, wie Gesteinsmehl, welche an der hydraulischen Umsetzung des Bindemittels keinen Anteil haben. Teilweise werden SCM gemeinsam mit solchen Zusätzen als mineralische Zusätze zusammengefasst.

Ein Klinker kann bereits alle notwendigen bzw. gewünschten Phasen enthalten und nach Vermahlen zu Zement direkt als Bindemittel zum Einsatz kommen. Häufig wird die Zusammensetzung des Bindemittels durch Vermischen von Zement und weiteren Komponenten, erfindungsgemäß zumindest dem Klinkerersatzmaterial, erhalten und auch zwei oder mehrere Klinker und/oder Zemente sind möglich, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

BCT-Zement ist an sich bekannt. Seine Herstellung wird z.B. in der WO 2013/023731 A1 und der WO 2013/023729 A1 beschrieben, BCT-Zemente in der WO 2013/023728 A1. Kurz zusammengefasst kann entweder eine separate Herstellung eines Ternesit-Zements und Mischen mit einem Calciumsulfolauminatzement (C$A) oder die Herstellung eines BCT-Zements in einem zweistufigen Prozess aus Sintern und Tempern erfolgen. Bei der zweistufigen Herstellung wird eine Rohmehlmischung geeigneter Zusammensetzung zunächst oberhalb von 1200 °C gesintert, um eine gute Umsetzung der Ausgangsmaterialien zu erreichen und genügend C₄A₃$ (Ye'elimit) und C₂S (Belit) zu bilden. Im zweiten Schritt wird das Klinkerzwischenprodukt in einem Temperaturbereich von 1200 bis 750 °C getempert, um ausreichende Mengen an C₅S₂$ (Ternesit) zu erhalten. Erfolgt eine getrennte Herstellung von C$A und Ternesit-Zement, so kann der C$A wie an sich bekannt erzeugt werden. Der Ternesit-Zement wird getrennt davon durch Sintern eines geeigneten Rohmehls bei einer Temperatur erzeugt, die für hohe Gehalte an Ternesit optimiert ist und auf die Gehalte an Ye'elimit und Belit keine Rücksicht nehmen muss. Auch dem im Zwei-Stufen-Verfahren hergestellten BCT-Zement kann natürlich C$A zugefügt werden, um die Zusammensetzung zu optimieren. Selbstverständlich eignet sich auch auf andere Weise hergestellter BCT-Zement für die Verwendung und das Verfahren gemäß der vorliegenden Erfindung.

Der im Zwei-Stufen-Verfahren erhaltene BCT-Klinker enthält üblicherweise die folgenden Hauptphasen:
- 5 bis 75 Gew.-% C₅S₂$
- 5 bis 70 Gew.-% C₄A₃$ und
- bis 80 Gew.-% C₂S.
Als Nebenphasen sind z.B. Calciumsilikate, Sulfate, Calciumaluminate, Spinelle, Vertreter der Melilith-Gruppe, Periklas, Freikalk, Quarz und/oder eine Glasphase, sind vorzugsweise in einem Anteil von 0,1 Gew.-% bis 30 Gew.-%, vorzugsweise von 5 Gew.-% bis 20 Gew.-% und besonders bevorzugt von 10 Gew.-% bis 15 Gew.-% vorhanden. Die Art und die Menge der einen oder mehreren Nebenphasen im Verhältnis zu den Hauptkomponenten kann durch die Gewichtsverhältnisse CaO/Al₂O₃(±Fe₂O₃), CaO/SiO₂ und den Anteil des Sulfatträgers in der Rohmehlmischung gesteuert werden. Eine bevorzugte Nebenphase ist C₂A_{y}F_{1-y}, mit y von 0,2 bis 0,8, vorzugsweise von 0,4 bis 0,6, speziell in der Form C₄AF, welche vorzugsweise in einer Menge von 3 bis 30 Gew.-%, besonders bevorzugt von 5 bis 25 Gew.-% und am meisten bevorzugt von 10 bis 20 Gew.-% vorliegt. Bevorzugt enthält der BCT-Klinker die folgenden Mengen der Hauptphasen: 10 - 60 Gew.-%, insbesondere 20 - 40 Gew.-% C₅S₂$, 10 - 60 Gew.-%, insbesondere 20 - 45 Gew.-% C₄A₃$ und 10 - 65 Gew.-%, insbesondere 20 - 50 Gew.-% C₂S. Der Freikalkgehalt liegt vorzugsweise unter 5 Gew.-%, insbesondere unter 2 Gew.-% und ganz besonders bevorzugt unter 1 Gew.-%. Es kann vorzugsweise eine röntgenamorphe Phase bzw. Glasphase in einer Menge von 1 bis 10 Gew.-%, bevorzugt 2 bis 8 Gew.-% und insbesondere 3 bis 5 Gew.-% vorliegen. Die Anteile beziehen sich auf die gesamte Menge Klinker, wobei in jedem Klinker die Summe aller enthaltenen Phasen 100 % beträgt.

Ein separat hergestellter Ternesit-Klinker umfasst in der Regel
- 20 bis 95 Gew.-% C₅S₂$
- 0 bis 15 Gew.-% C₄A₃$
- 0 bis 30 Gew.-% C₄AF
- 0 bis 20 Gew.-% reaktive Aluminate
- 0 bis 25 Gew.-% Periklas und
- 0 bis 30 Gew.-% weitere Nebenphasen.
Als weitere Nebenphasen können zum Beispiel, aber nicht ausschließlich, Alkali/Erdalkali-Sulfate, Quarze, Spinelle, Olivine, Pyroxene, Vertreter der Melilith- und Merwinit-Gruppe, Apatite, Ellestadite, Silicocarnotit, Freikalk, Spurrit, Quarz und/oder ein röntgenamorpher Phasenbestand / eine Glasphase, in einem Anteil von 0,1 Gew.-% - 30 Gew.-%, vorzugsweise von 2 Gew.-% - 20 Gew.-% und besonders bevorzugt von 5 Gew.-% - 15 Gew.-% auftreten. Bevorzugt enthält der Ternesit-Klinker die folgenden Mengen der genannten Phasen: 30 - 95 Gew.-%, insbesondere 40 - 90 Gew.-% C₅S₂$, 3 - 12 Gew.-%, insbesondere 5 - 10 Gew.-% C₄A₃$ und 5 - 70 Gew.-%, insbesondere 10 - 60 Gew.-% C₂S, 5 - 20 Gew.-%, insbesondere 8 - 15 Gew.-% C₂(A_{y}F_{(1-y)}), 1 - 15 Gew.-%, insbesondere 3 - 10 Gew.-% reaktive Aluminate (z.B. C₃A, CA, C₁₂A₇ ...) und 1 - 15 Gew.-%, insbesondere 2 - 10 Gew.-% Periklas. Der Freikalkgehalt des Klinkers liegt unter 5 Gew.-%, vorzugsweise unter 2 Gew.-% und besonders bevorzugt unter 1 Gew.-%. In bevorzugter Ausführung enthält der Ternesit-Klinker 1 - 10 Gew.-%, vorzugsweise 2 - 8 Gew.-% und noch stärker bevorzugt 3 - 5 Gew.-% mindestens einer röntgenamorphen Phase / einer Glasphase.

Für die Herstellung von BCT- und Ternesit-Klinker werden Rohstoffe verwendet, die zumindest CaO, SiO₂ und für BCT-Klinker auch Al₂O₃ bereitstellen. Bevorzugt werden zumindest zum Teil sekundäre Rohstoffe verwendet, um diese einer vorteilhaften Nutzung zuzuführen und natürliche Ressourcen zu schonen. Geeignete Rohstoffe sind zum Beispiel, aber nicht ausschließlich Kalkstein, Bauxit, Ton / Tonstein, Basalte, Periodite, Dunite, Ingnimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphorgips, etc. Da die Rohstoffe, welche Al₂O₃ bereitstellen, fast immer auch Fe₂O₃ enthalten, liegt Ye'elimit normalerweise in der Form von C₄(AₓF₁₋ₓ)₃$ mit x von 0,1 bis 1, bevorzugt von 0,8 bis 0,95, vor, was vorteilhaft ist, da die Mischphase mit Eisen besonders reaktiv ist.

Geeignete C$A können in an sich bekannter Weise hergestellt werden und sind auch kommerziell verfügbar, beispielsweise:

| **Lafarge Aether®**: | | | |
|---|---|---|---|
| Belit (α; +/-β) C₂S | 40 - 75%; | Ye'elimit C₄A₃$ | 15 - 35%; |
| Ferrit C₂(A,F) | 5 - 25%; | Nebenphasen | 0,1 - 10% |

| **Lafarge Rockfast®:** | | | |
|---|---|---|---|
| Belit (α; +/-β) C₂S | 0 - 10%; | Ye'elimit C₄A₃$ | 50 - 65% |
| Aluminat CA | 10 - 25%; | Gehlenit C₂AS | 10 - 25%; |
| Ferrit C₂(A,F) | 0 - 10%; | Nebenphasen | 0 - 10% |

| **Italcementi Alipre®:** | | | |
|---|---|---|---|
| Belit (α; +/-β) C₂S | 10 - 25%; | Ye'elimit C₄A₃$ | 50 - 65%; |
| Anhydrit C$ | 0 - 25%; | Nebenphasen | 1 - 20% |
| **Cemex CSA:** | | | |
| Belit (α; +/-β) C₂S | 10 - 30%; | Ye'elimit C₄A₃$ | 20 - 40% |
| Anhydrit C$ | >1%; | Alit C₃S | >1 - 30%; |
| Freikalk CaO | <0.5 - 6%; | Portlandit Ca(OH)₂ | 0 - 7%; |
| Nebenphasen | 0 - 10% | | |
| **Denka® CSA** | | | |
| Belit (α; +/-β) C₂S | 0 - 10%; | Ye'elimit C₄A₃$ | 15 - 25%; |
| Anhydrit C₂(A,F) | 30 - 40%; | Portlandit Ca(OH)₂ | 20 - 35%; |
| Freikalk CaO | 1 - 10%; | Nebenphasen | 0 - 10% |

| **China Type II & III CSA** | | | |
|---|---|---|---|
| Belit (α; +/-β) C₂S | 10 - 25%; | Ye'elimit C₄A₃$ | 60 - 70%; |
| Ferrit C₂(A,F) | 1 - 15%; | Nebenphasen | 1 - 15% |

| **Barnstone CSA** | | | |
|---|---|---|---|
| Belit (α; +/-β) C₂S | 22%; | Ye'elimit C₄A₃$ | 60%; |
| Aluminat C₁₂A₇ | 5%; | Alit C₃S | 8%; |
| Ferrit C2(A,F) | 4%; | Nebenphasen | 1%. |

Diese C$A-Zemente enthalten teilweise Ternesit als Nebenphase, jedoch in der Regel (viel) zu wenig. Außerdem ist ein separat hergestellter Ternesit meist reaktiver, da er bei niedrigerer Temperatur gesintert worden ist. Daher wird zur Bereitstellung des erfindungsgemäß verwendeten BCT-Zement vorzugsweise ein Gemisch aus C$A- und Ternesit-Zement hergestellt oder ein im Zwei-Stufen-Verfahren erzeugter BCT-Zement verwendet.

Typische Zusammensetzungen für bevorzugte BCT-Zemente sind im Vergleich zu Portlandzement (OPC) in der folgenden Tabelle dargestellt.

**Tabelle 1**

| Phase | | OPC | BCT für 3D-Druck |
|---|---|---|---|
| C₃S | Alit | 55 - 75 % | |
| C₂S | Belit | 10 - 20 % | 40 - 60 % |
| C₃A | Tricalciumaluminat | 5 - 10% | als Nebenphase |
| C₄AF / C₂F | Ferrite | 5 - 10% | 5 - 15% |
| C₄A₃$ | Ye'elimit | | 20 - 70 % |
| C₅S₂$ | Ternesit | | 5 - 20% |
| Nebenphasen | | 0 - 5 % | 0 - 10% |

Während beim Portlandzement Alit für die Frühfestigkeit verantwortlich ist, ggfs. bei Zugabe von C$A auch Ye'elimit, beruht die schnelle Festigkeitsentwicklung bis 2 Tage beim BCT-Zement allein auf dem Ye'elimit. Dessen Anteil darf daher erfindungsgemäß nicht zu niedrig sein und beträgt mindestens 20 Gew.-%. Ternesit und Belit sind für die Endfestigkeit nach 28 Tagen und mehr entscheidend. Es sollten mindestens 40 Gew.-% Belit und mindestens 5 Gew.-% Ternesit enthalten sein. Ein Vorteil der BCT Technologie besteht in der höheren Reaktivität von Ternesit im Vergleich zu Belit im OPC. Zum Teil kann schon nach 24 Stunden eine hohe Umsetzung im Zuge der Hydratation festgestellt werden.

Aufgrund der sehr hohen Reaktivität von Ye'elimit weisen BCT Zemente eine ähnlich verkürzte Offenzeit wie Portlandzement auf, wenn dieser keinen Gips als Verzögerer enthält. In Laborversuchen gemessene Zeitspannen reichen hierbei von rund einer Minute bis hin zu 20 Minuten. Im Gegensatz zu Portlandklinker basierten Zementen ohne verzögernd wirkende Sulfatträger können bei BCT Zementen hohe Frühfestigkeiten gemessen werden.

Ein großer Vorteil von BCT Zementen ist somit, dass weder der Zement noch der daraus hergestellte Baustoff zwingend erhärtungssteuernde Zusatzmittel benötigen. Es liegt jedoch im Rahmen der Erfindung, durch deren zusätzliche Verwendung eine weitere Optimierung der Eigenschaften einzustellen.

Demgemäß können im Baustoff neben Gesteinskörnung und Wasser auch ein oder mehrere Zusatzmittel enthalten sein, auch Zusatzstoffe sind nicht ausgeschlossen. Vor allem aus Kostengründen ist es bevorzugt, keine oder nur wenige Zusatzmittel und diese nur in geringer Menge zu verwenden.

Die Mahlfeinheit des Zementes (Blainewert) liegt üblicherweise im Bereich von 2500 cm²/g bis zu 10000 cm²/g, bevorzugt im Bereich von 3500 cm²/g bis 6000 cm²/g.

Die Gesteinskörnung muss in der Feinheit an die 3D-Druckvorrichtung angepasst werden, in der Regel wird daher Gesteinskörnung mit einer Partikelgröße von bis zu 32 mm, bevorzugt bis zu 8 mm, insbesondere bis zu 4 mm (Sand), verwendet. Es ist nicht notwendig, eine spezielle Gesteinskörnung einzusetzen, alle für Beton zugelassenen Gesteinskörnungen sind geeignet. So können Sand und/oder Brechsand und/oder Kies und/oder Gesteine und/oder recyclierte Gesteinskörnungen natürlichen Ursprungs und/oder aus industrieller Herstellung sowie Kombinationen von zwei oder mehr davon verwendet werden.

Das Gewichtsverhältnis BCT-Zement zu Gesteinskörnung beträgt üblicherweise von 1:2 bis 1:8, bevorzugt von 1:3 bis 1:5. Es richtet sich im wesentlichen nach der notwendigen Grünstandfestigkeit des Baustoffs.

Der Wasser/Zementwert liegt typischerweise im Bereich von 0,25 bis 0,8, vorzugsweise von 0,3 bis 0,5.

Bei Verwendung von Klinkerersatzmaterialien wie z.B. Flugasche Hüttensand oder Microsilica sollte das Massenverhältnis BCT-Zement : Klinkerersatzmaterial 1:0,7 bis 1:0,1 bevorzugt 1:0,3 bis 1:0,2 betragen.

Handelsübliche Betonzusatzmittel können falls erforderlich bis zu den vom Hersteller angegebenen Höchstdosierungen eingesetzt werden. Sollten widererwarten verzögernde Zusatzmittel erforderlich sein, so können bevorzugt Gluconate, Fruchtsäure, Phosphate, Phosphonate und Borate sowie Gemische daraus und insbesondere Phosphate, Phosphonate oder Borate sowie Gemische daraus eingesetzt werden.

Inerte Zusatzstoffe können zur Eigenschaftseinstellung in veränderlichen Massenanteilen, je nach Anforderung, zugegeben werden. Zur Verbesserung der Grünstandsfestigkeit können z. B. handelsüblich Fasern (Stahl, Kunststoff, Glas oder Karbonat) zum Einsatz kommen.

Zur gestalterischen Ausarbeitung können handelsübliche Betonpigmente auf Basis von Ruß für schwarzen bzw. auf Eisenoxidbasis ebenfalls für schwarzen sowie roten, braunen oder gelben Beton zum Einsatz kommen. Chromdioxid basierte Pigmente können zur Erzielung von grünem Beton und Titandioxid (optisch inaktiv) zur Aufhellung des vorherrschenden grau Tons eingesetzt werden.

Ein Photokatalysator, insbesondere katalytisch aktives Titandioxid kann zugegeben werden, um Luftverbesserungen durch eine Reduzierung von NOₓ an der Bauteiloberfläche zu erzielen.

Alle Pigmente oder andere Zusatzstoffe kommen in den für Beton üblichen Mengen zum Einsatz.

Der erfindungsgemäß verwendete Baustoff umfasst daher zumindest BCT-Zement, Gesteinskörnung und Wasser und kann aus diesen bestehen. Gegebenenfalls ist zusätzlich mindestens eines von Klinkerersatzmaterial, Zusatzmittel und Zusatzstoff enthalten. Vorzugsweise sind Klinkerersatzmaterial(ien) enthalten. Ein oder mehrere verzögernde oder beschleunigende Zusatzmittel werden nur bei Bedarf zugefügt.

Dieser Baustoff wird erfindungsgemäß bereitgestellt und mittels 3D-Drucker zu einem Bauteil (z.B. Wände, Decken, Bodenplatten) oder Gebäude geformt. Der Drucker muss naturgemäß an die zu fertigenden Teile und den Baustoff als Material angepasst sein. Solche Drucker sind bekannt.

Das erfindungsgemäße Verfahren erlaubt so, Bauteile und Gebäude im 3D-Druck schnell und nach individuellen Plänen herzustellen. Es sind keine Formen nötig. Es gibt auch keinen oder sehr wenig Abfall. Im Vergleich zum bekannten Contuor Crafting und den z.B. aus CN 104 310918 A bekannten Baustoffen ist der BCT-Zement basierte Baustoff kostengünstiger und einfacher. Da nicht so viele Komponenten benötigt werden, sind Fehler beim Mischen (Dosierung) minimiert. Auch eine aufwändige Kontrolle und Anpassung der Mengen verschiedener Zusatzmittel entfällt. Es kann mit nur einem Baustoff gearbeitet werden.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiel 1

Für einen BCT-Zement wurden an zwei Probenserien Erstarrungsbeginn und -ende gemäß DIN EN 196 Teil 3 sowie Festigkeiten nach 1, 2, 7, 28 und 90 Tagen gemäß DIN EN 196 Teil 1 ermittelt. Der BCT-Zement hatte gemäß Röntgenfluoreszenzanalyse folgende Zusammensetzung:

| **Bestandteil** | **Gehalt [Gew.-%]** |
|---|---|
| Glühverlust | 1,01 |
| SiO₂ | 17,95 |
| Al₂O₃ | 15,58 |
| TiO₂ | 0,60 |
| MnO | 0,04 |
| Fe₂O₃ | 3,23 |
| CaO | 51,48 |
| MgO | 0,96 |
| K₂O | 0,68 |
| Na₂O | 0,12 |
| SO₃ | 7,16 |
| P₂O₅ | 0,21 |
| Summe | 99,1 |

Die Hauptphasen waren 24,8 Gew.-% Ye'elimit (C₄A₃$), 52,4 Gew.-% Belit (β-C₂S) und 8,7 Gew.-% Ferrite (C₄AF/C₂F). Der Zement wurde mit Sand gemäß DIN EN 196 Teil 1 im Verhältnis 1:3 gemischt und das Gemisch mit Wasser im Verhältnis Zement:Wasser von 1:0,5 angemacht.

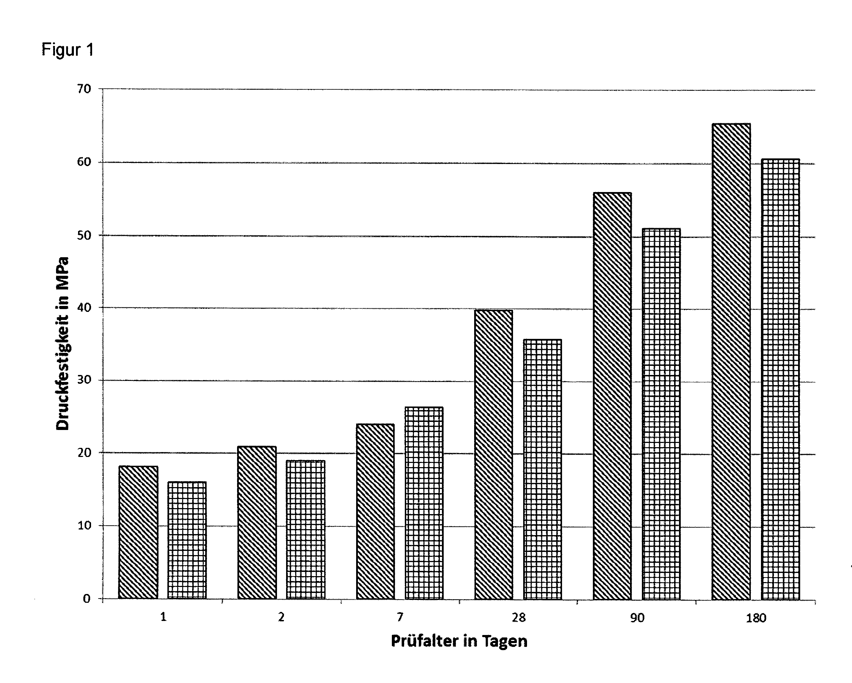

Der Erstarrungsbeginn lag bei 20 Minuten und das Erstarrungsende bei 30 Minuten. Die gemessenen Druckfestigkeiten sind in Figur 1 dargestellt. Es wurden zwei Serien mit jeweils drei Probekörpern gemessen, so dass jeder der beiden dargestellten Werte für einen Zeitpunkt einen Mittelwert von 6 Messungen darstellt.

Die gemessenen Festigkeiten zeigen, dass auch ohne Zusatz von verzögernden oder beschleunigenden Zusatzmitteln schnell eine ausreichende Festigkeit erzielt wird und die Endfestigkeit auch ohne Bewehrung oder andere Maßnahmen statisch stabile Bauteile bzw. Gebäude ergibt.

## Patentansprüche

1. Verwendung von Belit-Calciumsulfoaluminat-Ternesit-Zement als Baustoff zur Herstellung von Bauteilen und Gebäuden durch 3D-Drucken.

2. Verwendung gemäß Anspruch 1, **dadurch gekennzeichnet, dass** der Belit-Calciumsulfoaluminat-Ternesit-Zement
- 5 bis 75 Gew.-% C₅S₂$
- 5 bis 70 Gew.-% C₄A₃$
- 1 bis 80 Gew.-% C₂S und
- 0 bis 30 Gew,-% Nebenphasen
enthält, wobei die Summe aller enthaltenen Phasen 100 Gew.-% beträgt.

3. Verwendung gemäß Anspruch 1 oder 2, **dadurch gekennzeichnet, dass** die Nebenphasen im Belit-Calciumsulfoaluminat-Ternesit-Zement eines oder mehrere von Calciumsilikaten, Sulfaten, Calciumaluminaten, Spinellen, Vertretern der Melilith-Gruppe, Periklas, Freikalk, Quarz und/oder einer Glasphase sind.

4. Verwendung gemäß einem der Ansprüche 1 bis 3, **dadurch gekennzeichnet, dass** die Nebenphasen in einem Anteil von 0,1 Gew.-% bis 30 Gew.-%, insbesondere von 5 Gew.-% bis 20 Gew.-% und besonders bevorzugt von 10 Gew.-% bis 15 Gew.-%, vorliegen.

5. Verwendung gemäß einem der Ansprüche 1 bis 4, **dadurch gekennzeichnet, dass** der Belit-Calciumsulfoaluminat-Ternesit-Zement 10 - 60 Gew.-%, insbesondere 20 - 40 Gew.-% C₅S₂$, 10 - 60 Gew.-%, insbesondere 20 - 45 Gew.-% C₄A₃$ und 10 - 65 Gew.-%, insbesondere 20 - 50 Gew.-% C₂S enthält.

6. Verwendung gemäß einem der Ansprüche 1 bis 5, **dadurch gekennzeichnet, dass** der Freikalkgehalt im Belit-Calciumsulfoaluminat-Ternesit-Zement unter 5 Gew.-%, insbesondere unter 2 Gew.-% und ganz besonders bevorzugt unter 1 Gew.-% liegt.

7. Verwendung gemäß einem der Ansprüche 1 bis 6, **dadurch gekennzeichnet, dass** im Belit-Calciumsulfoaluminat-Ternesit-Zement eine röntgenamorphe Phase bzw. Glasphase in einer Menge von 1 bis 10 Gew.-%, bevorzugt 2 bis 8 Gew.-% und insbesondere 3 bis 5 Gew.-% vorliegt.

8. Verfahren zur Herstellung von Bauteilen und Gebäuden **dadurch gekennzeichnet, dass** man:
- einen Belit-Calciumsulfoaluminat-Ternesit-Zement bereitstellt,
- den Belit-Calciumsulfoaluminat-Ternesit-Zement mit Gesteinskörnung und Wasser zu einem Baustoff mischt, und
- den Baustoff mit einem 3D-Drucker lagenweise zu dem Bauteil oder Gebäude formt.

9. Verfahren gemäß Anspruch 8, **dadurch gekennzeichnet, dass** man als Gesteinskörnung Sand und/oder Brechsand und/oder Kies und/oder gebrochene Gesteine und/oder recyclierte Gesteinskörnungen natürlichen Ursprungs und/oder aus industrieller Herstellung mit einer Partikelgröße von bis zu 32 mm, bevorzugt bis zu 8 mm, insbesondere bis zu 4 mm verwendet.

10. Verfahren gemäß Anspruch 8 oder 9, **dadurch gekennzeichnet, dass** in dem Baustoff ein Gewichtsverhältnis von Belit-Calciumsulfoaluminat-Ternesit-Zement zu Gesteinskörnung im Bereich von 1:2 bis 1:8, bevorzugt von 1:3 bis 1:5, eingestellt wird.

11. Verfahren gemäß einem der Ansprüche 8 bis 10, **dadurch gekennzeichnet, dass** in dem Baustoff ein Wasser/Zementwert im Bereich von 0,25 bis 0,8, vorzugsweise von 0,3 bis 0,5, eingestellt wird.

12. Verfahren gemäß einem der Ansprüche 8 bis 11, **dadurch gekennzeichnet, dass** dem Baustoff mindestens eines von Klinkerersatzmaterial, Zusatzmittel und Zusatzstoff zugemischt wird.

13. Verfahren gemäß Anspruch 12, **dadurch gekennzeichnet, dass** dem Baustoff Klinkerersatzmaterialien wie Flugasche, Hüttensand und/oder Microsilica, vorzugsweise in einem Gewichtsverhältnis Belit-Calciumsulfoaluminat-Ternesit-Zement: Klinkerersatzmaterial im Bereich von 1:0,7 bis 1:0,1, insbesondere von 1:0,3 bis 1:0,2, zugemischt werden.

14. Verfahren gemäß Anspruch 12 oder 13, **dadurch gekennzeichnet, dass** dem Baustoff verzögernde Zusatzmittel, bevorzugt Gluconate, Fruchtsäure, Phosphate, Phosphonate oder Borate sowie Gemische daraus und insbesondere Phosphate, Phosphonate oder Borate sowie Gemische daraus zugesetzt werden.

15. Verfahren gemäß einem der Ansprüche 12 bis 14, **dadurch gekennzeichnet, dass** dem Baustoff als Zusatzstoff Fasern, insbesondere aus Stahl, Kunststoff, Glas und/oder Karbonat, zugemischt werden.

16. Verfahren gemäß einem der Ansprüche 12 bis 15, **dadurch gekennzeichnet, dass** dem Baustoff als Zusatzstoff ein oder mehrere Betonpigmente und/oder Photokatalysatoren zugemischt werden.

17. Verfahren gemäß einem der Ansprüche 8 bis 16, **dadurch gekennzeichnet, dass** der Belit-Calciumsulfoaluminat-Ternesit-Zement durch Mischen von Calciumsulfoaluminat-Zement und Ternesit-Zement, der durch Sintern eines Rohmehls aus Rohstoffen, die zumindest CaO und SiO₂ bereitstellen, bei Temperaturen von 900 bis 1300 °C erhalten wurde, bereitgestellt wird.

18. Verfahren gemäß einem der Ansprüche 8 bis 16, **dadurch gekennzeichnet, dass** der Belit-Calciumsulfoaluminat-Ternesit-Zement durch Mahlen eines Belit-Calciumsulfoaluminat-Ternesit-Klinkers bereitgestellt wird, wobei der Belit-Caiciumsulfoaluminat-Ternesit-Klinker durch Sintern eines Rohmehls aus Rohstoffen, die zumindest CaO, SiO₂ und Al₂O₃ bereitstellen, in einem Temperaturbereich von > 1200 °C bis 1350 °C, Tempern eines dadurch erhaltenen Klinkerzwischenprodukts in einem Temperaturbereich von 1200 °C bis zu einer unteren Grenze von 750 °C zu dem Belit-Calciumsulfoaluminat-Ternesit-Klinker und Abkühlen des Belit-Calciumsulfoaluminat-Ternesit-Klinkers erhalten wurde.
